# EUROPÄISCHE PATENTSCHRIFT

(11) **EP 2 190 627 B1**
(45) Veröffentlichungstag und Bekanntmachung des Hinweises auf die Patenterteilung: **18.04.2012**
(21) Anmeldenummer: 08784446.0
(22) Anmeldetag: 12.09.2008
(51) Int. Cl.: B24B 33/08, B24B 27/00, B24B 1/04, B24B 35/00

(54) **POLIERVORRICHTUNG**
POLISHING DEVICE
DISPOSITIF DE POLISSAGE

(30) Priorität: 14.09.2007 DE 102007044077
(43) Veröffentlichungstag der Anmeldung: 02.06.2010
(73) Patentinhaber: Strecon A/S, 6400 Sønderborg (DK)
(72) Erfinder: LORENZEN, Kim, DK-6400 Sønderborg (DK); GRØNBAEK, Jens, DK-6200 Aabenraa (DK)
(74) Vertreter: Knoblauch, Andreas
(86) Internationale Anmeldenummer: PCT/DK2008/000323
(87) Internationale Veröffentlichungsnummer: WO 2009/033485

(56) Entgegenhaltungen:
- US-A1- 2004 259 471

## Beschreibung

Die Erfindung betrifft eine Poliervorrichtung mit einem Werkzeughalter, an dem ein Polierwerkzeug angeordnet ist und der mit einem Werkstückhalter, in dem ein Werkstück mit einer zu polierenden Werkstückoberfläche gehalten ist, zusammenwirkt, wobei der Werkstückhalter und der Werkzeughalter relativ zueinander in eine erste Richtung und eine sich von der ersten Richtung unterscheidenden zweiten Richtung bewegbar sind.

Eine derartige Poliervorrichtung ist beispielsweise aus DE 27 42 113 A1 bekannt. Das Polierwerkzeug ist in eine erste Richtung hin- und herbewegbar. Das Werkstück, in das das Polierwerkzeug eintaucht, wird in eine Rotation versetzt, so dass sich zwischen dem Polierwerkzeug und dem Werkstück eine Bewegung in eine zweite Richtung ergibt. Das Werkstück wird außen von Stützrollen gehalten, die gleichzeitig rotatorisch angetrieben sind, um das Werkzeug zu drehen.

Polieren, Schleifen und Honen sind Verfahren zur Bearbeitung einer Oberfläche, die einen Materialabtrag mit unbestimmten Schneiden bewirken. Andere Arbeitsvorgänge, wie Drehen und Fräsen bewirken eine Span abhebende Verformung einer Oberfläche mit kontrollierten Schneiden. Hier sind Spuren der Schneiden praktisch nicht vermeidbar.

Während beim Schleifen die Oberflächenbearbeitung praktisch ausschließlich durch Materialabtrag erfolgt, werden beim Polieren Rauhigkeitsspitzen der Oberflächenstruktur plastisch und teilplastisch geformt und so geebnet. Die im Mikro- oder Nanobereich verlaufenden Oberflächenbearbeitungsverfahren im Grenzbereich zwischen Mikroschleifen und Polieren sind wissenschaftlich immer noch nicht vollständig erforscht.

Das Polieren von bestimmten Oberflächen wird auch heute noch praktisch ausschließlich manuell vorgenommen. Dies gilt beispielsweise bei Werkzeugen, die zur Umformung von metallenen Werkstücken eingesetzt werden, beispielsweise bei der Kaltfließtechnik. Hier hat die Beschaffenheit der polierten Werkzeugoberfläche einen maßgeblichen Einfluss auf den Umformvorgang und auf die Lebensdauer der Umformwerkzeuge. Zum Polieren werden rotationssymmetrische Umformwerkzeuge beispielsweise in ein Drehfutter einer Polierbank oder einer Drehbank gespannt und zum Rotieren gebracht. Ein Arbeiter poliert dann die Funktionsflächen des Umformwerkzeugs mit einem Polierwerkzeug, das er manuell parallel zur Achsrichtung hin- und herbewegt. Als Polierwerkzeuge kommen typischerweise Poliersteine, z.B. aus Siliciumcarbid (Carborund), oder Holzstäbe in Verbindung mit Poliermitteln, z.B. Diamantpaste, zum Einsatz. Während des Poliervorgangs prüft der Arbeiter mehrmals das Ergebnis und variiert verschiedene Parameter, u.a. den Auflagedruck, die Rotationsgeschwindigkeit und/oder seine Handbewegung, und wechselt nach Bedarf das Polierwerkzeug, um sich so stufenweise an das gewünschte Polierergebnis heranzuarbeiten. Bei jedem Wechsel des Polierwerkzeugs müssen die zu polierenden Oberflächen sorgfältig gereinigt werden, um Reste von gröberen Poliermitteln zu entfernen, bevor mit einem feineren Polierwerkzeug weiterpoliert werden kann. Ansonsten könnten zurückbleibende grobe Polierpartikel in nachfolgenden Polierschritten Spuren an der Werkstückoberfläche verursachen.

Das Polieren erfordert also eine erhebliche Erfahrung des Arbeiters. Verschiedene Parameter, die der Arbeiter beeinflussen kann, beeinflussen das Polierergebnis, beispielsweise die Art, wie der Arbeiter seine Handbewegung ausführt, wann und wie er das Polierwerkzeug wechselt und wie gut er die einzelnen Polierschritte aufeinander abstimmt. Bei Anlagen, die für die Serienfertigung von Produkten in hoher Stückzahl eingesetzt werden, beispielsweise Kaltfließpressen, und bei denen gleichartige Umformwerkzeuge oder Umform-Werkzeugteile typischerweise in Mengen von mehreren Hundert Stück pro Jahr verwendet werden, wirkt es sich nachteilig aus, dass die Eigenschaften dieser Umformwerkzeuge von der Handarbeit unterschiedlicher Mitarbeiter abhängen. So führen Unterschiede in der Poliergüte zu großen Schwankungen in der Standzeit der Umformwerkzeuge. Die Streubreite kann dabei mit einem Faktor von 3 bis 5 streuen.

Die Prüfung der polierten Oberflächen ist schwierig. So reicht es beispielsweise nicht aus, den Glanz der Oberfläche zu beurteilen. So können beispielsweise Umformwerkzeuge mit spiegelnden und damit anscheinend standfesten Oberflächen frühzeitig ausfallen, wenn die Oberflächen nicht durch die richtigen Polierstufen erzielt wurden.

Da die Endqualität der Oberflächen nur mit großem Aufwand geprüft werden kann, geschieht dies nur in Einzelfällen. Das Fehlen der Prozess- und Produktdokumentation wirkt der Sicherstellung einer gleichbleibenden Fertigungsqualität entgegen und stimmt sehr schlecht mit dem heutigen Dokumentationsbedarf, insbesondere bei zertifizierten Fertigungsprozessen oder -anlagen, überein.

Aufgrund des hohen Anteils an manueller Arbeit ist das manuelle Polieren von Umformwerkzeugen außerdem sehr teuer. Weiter wirken die manuelle Bewegung und die Druckbeaufschlagung im Sinne von Arbeitsbelastung belastend auf den Arbeiter, besonderes weil diese körperlichen Arbeitsbewegungen typischerweise über einen ganzen Arbeitstag ausgeführt werden.

Der Arbeiter kann das Polierwerkzeug zudem nur mit einer begrenzten Geschwindigkeit und mit einem begrenzten Auflagedruck bewegen. Um die für ein gutes und schnelles Polierergebnis notwendige mechanische Leistung in den Poliervorgang einzubringen, wird daher die Rotation des Werkstücks normalerweise relativ schnell gewählt. Hierdurch verläuft die Polierbahn, d.h. die Bahn, die das Polierwerkzeug über die Werkstückoberfläche beschreibt, im Wesentlichen tangential zur Rotation des Werkstücks, also annähernd kreisförmig. Typische Bearbeitungsspuren, wie z.B. Drehspuren, die aus früheren Bearbeitungsschritten am Werkstück stammen, verlaufen typischerweise ebenfalls tangential und sind deshalb mit manuellem Polieren nur schwer zu entfernen, welches entweder zu langen Polierzeiten oder zu schlechter Endqualität führt.

Die relativ großen Handbewegungen des Arbeiters - typisch in der Größenordnung mehrerer Zentimeter - führen weiter dazu, dass der axial mittlere Bereich des Werkstücks erheblich kräftiger poliert wird als die Endbereiche. Dies gilt insbesondere bei kleineren Werkstücken. Diese axiale Ungleichmäßigkeit des Poliervorgangs führt ebenfalls zu langen Polierzeiten oder zu schlechten Polierergebnissen im Bereich der axialen Enden des Werkstücks.

DE 199 47 006 A1 zeigt eine Schleifblockhalterung, die verwendet werden soll, um eine Fahrzeugbremstrommel abschließend zu schleifen. Die Schleifblockhalterung weist einen Werkzeughalter auf, in den mehrere Schleifwerkzeuge eingesetzt sind. Der Werkzeughalter ist mit Bolzen und Federn an einer Halterung so befestigt, dass er sich mit mehreren Freiheitsgraden bewegen kann. Die Kraft, mit der der Werkzeughalter gegen das Werkstück wirkt, wird durch eine Positionierung eingestellt.

US 2002/0031987 A1 zeigt eine Vorrichtung, bei der die Oberfläche einer Scheibe durch Honen geglättet wird. Das zum Honen verwendete Werkzeug ist kardanisch aufgehängt, kann also seine Lage in gewissen Grenzen gegenüber dem Werkstück frei einstellen.

US 2004/0259471 A1 zeigt eine Poliervorrichtung mit einem Polierwerkzeug, das an einem Werkzeughalter angeordnet ist und mithilfe eines Handhabungsarmes eines Roboters über eine oder mehrere Oberflächen eines Werkstücks geführt wird. Der Werkzeughalter weist einen Vorspannantrieb auf, der am Handhabungsarm befestigt ist und an dem ein flacher Halter befestigt ist. An der Breitseite des Halters ist das Werkzeug befestigt, das gegenüber dem Halter drehantreibbar ist. Die Schmalseite des Halters ist dem Werkstück zugewandt.

Der Erfindung liegt die Aufgabe zugrunde, einen Poliervorgang zumindest teilweise reproduzierbar und dokumentierbar zu machen.

Diese Aufgabe wird bei einer Poliervorrichtung der eingangs genannten Art dadurch gelöst, dass der als Stab ausgebildete Werkzeughalter in eine dritte Richtung, die senkrecht zur ersten und zur zweiten Richtung und praktisch senkrecht auf der Werkstückoberfläche steht, federnd ausgebildet ist und in die dritte Richtung seine kleinste Steifigkeit aufweist.

Die dritte Richtung steht also praktisch senkrecht auf der Werkstückoberfläche eines Werkstücks, das im Werkstückhalter gehalten ist. Die Bewegung des Werkstückhalters überträgt sich im einfachsten Fall direkt auf das Werkstück. Das Polierwerkzeug kann durch die federnde Ausbildung mit einer gewissen Kraft gegen die Oberfläche gedrückt werden. Der Werkzeughalter ist dabei maschinell geführt, so dass die Bewegungen in die erste Richtung und in die zweite Richtung gesteuert durch eine Maschine durchgeführt werden können. Die Positionierung des Werkzeughalters in die dritte Richtung ist dabei weniger kritisch. Aufgrund der federnden Ausbildung des Werkzeughalters passt sich das Polierwerkzeug an die Oberfläche des Werkstücks an und gleitet aufgrund der Relativbewegung in die erste und zweite Richtung über die Oberfläche des Werkstücks hinweg, um es zu polieren. Eine Veränderung der Position des Werkzeughalters in der dritten Richtung vergrößert oder verkleinert die Anpresskraft geringfügig, was aber für den Poliervorgang in der Regel noch hinnehmbar ist. Durch die Verwendung einer Maschine zum Polieren lässt sich der Poliervorgang dokumentieren und reproduzieren. Die Relativbewegungen zwischen dem Werkstück und dem Werkzeug können auf unterschiedliche Arten erzeugt werden. Das Werkstück kann in einer Werkstückhalterung angeordnet sein, die Bestandteil der Poliervorrichtung ist. Der Werkstückhalter kann auch getrennt von der Poliervorrichtung vorgesehen sein, so dass der Werkzeughalter zum Polieren von der Poliervorrichtung an das Werkstück herangeführt werden kann - oder umgekehrt, beispielsweise im Fußboden über montierte Schienen. Der Werkstückhalter kann beispielsweise eine getrennt von der Poliervorrichtung angeordnete Drehbank oder eine andere Werkzeugmaschine sein. Hierdurch kann der Aufwand beim Hantieren des Werkstücks in der Fertigung insgesamt verringert werden. Der Werkzeughalter ist also in die erste und in die zweite Richtung steifer. Man kann dann das Polierwerkzeug mit einer gewissen Kraft in die erste Richtung bewegen, ohne dass sich der Werkzeughalter verformt. Dadurch lässt sich eine relativ genaue Steuerung der Bewegung des Polierwerkzeugs erreichen, so dass man das Polierwerkzeug entlang vorbestimmter Polierbahnen führen kann. Die Steifigkeit des Werkzeughalters in die erste und zweite Richtung soll so groß sein, dass das Polierwerkzeug in die erste und zweite Richtung nicht vibriert oder schwingt. Da der Werkzeughalter in die dritte Richtung federnd ausgebildet ist, hat er in die dritte Richtung eine wesentlich geringere Steifigkeit. Die Steifigkeit in die erste Richtung ist mindestens fünfmal so groß wie die Steifigkeit in die dritte Richtung, d.h. man benötigt in die erste Richtung mindestens die fünffache Kraft, um den Werkzeughalter um das gleiche Maß zu verformen wie in die dritte Richtung.

Vorzugsweise weist der Werkzeughalter in die zweite Richtung eine Steifigkeit auf, die mindestens fünfmal größer als die Steifigkeit in die dritte Richtung ist. Auch dadurch wird vermieden, dass das Polierwerkzeug durch Relativbewegung zum Werkstück hin tangential verschoben wird oder zum Vibrieren gebracht wird.

Vorzugsweise weist der Werkzeughalter eine Länge auf, die mindestens dem Zehnfachen seines maximalen wirksamen Durchmessers entspricht. Der wirksame Durchmesser wäre bei einem kreisrunden Querschnitt der Durchmesser. Wenn der Querschnitt von der Kreisform abweicht, dann ist der wirksame Durchmesser die Quadratwurzel aus der Querschnittsfläche. Die Verwendung eines relativ langen Werkzeughalters hat zwei Vorteile. Zum einen kann man mit einem derartig langen Werkzeughalter auch in das Innere von Werkstücken vordringen und diese polieren, die nur einen geringen lichten Raum in ihrem Inneren haben. Zum anderen ergibt sich dadurch die geringe Steifigkeit, also die federnde Eigenschaft, in die dritte Richtung auf bequeme Weise automatisch.

Vorzugsweise ist ein Antrieb vorgesehen, der der Relativbewegung zwischen dem Werkstückhalter und dem Polierwerkzeug eine oszillierende Zusatzbewegung überlagert. Durch die Relativbewegung zwischen dem Werkstückhalter und dem Polierwerkzeug kann man sozusagen eine Polierbahn vorgeben, entlang der das Polierwerkzeug über das Werkstück geführt wird. Der eigentliche Poliervorgang ergibt sich dann dadurch, dass das Polierwerkzeug hin und her schwingt. Im einfachsten Fall führt das Polierwerkzeug dann eine sinusförmige Bewegung um die Polierbahn herum aus.

Hierbei ist bevorzugt, dass die oszillierende Bewegung eine Frequenz im Bereich von 20 bis 100 Hz aufweist. Dadurch ist es möglich, das Polierwerkzeug mit einer relativ hohen Geschwindigkeit über die Oberfläche des zu polierenden Werkstücks zu bewegen, das im Werkstückhalter aufgenommen ist. Wenn die oszillierende Bewegung in die erste Richtung erfolgt, dann kann man durch das Oszillieren mit der angegebenen Frequenz erreichen, dass der Einfluss der Bewegung in die erste Richtung mindestens so groß wird wie der Einfluss der Bewegung in die zweite Richtung. Es ist also möglich, das Polierwerkzeug so über die Oberfläche des Werkstücks zu bewegen, dass nahezu jeder Punkt durch Polierbahnen mit unterschiedlichen Winkeln durchlaufen wird. Dies ergibt ein hervorragendes Polierergebnis.

Vorzugsweise weist die oszillierende Bewegung eine Amplitude im Bereich von 0,05 bis 5 mm auf. Zweckmäßigerweise ist die Amplitude der oszillierenden Bewegung kleiner als die Erstreckung des Polierwerkzeugs in die Richtung der oszillierenden Bewegung. Dadurch kann eine sehr gleichmäßige Verteilung der geleisteten Polierarbeit in die erste Richtung erreicht werden.

Vorzugsweise ist der Antrieb mit einer Steuereinrichtung verbunden, die eine Oszillationsfrequenz und/oder eine Oszillationsamplitude verändert. Die Veränderung kann durch einen Zufallsgenerator oder durch ein Programm gesteuert werden. Es ist auch möglich, die Steuereinrichtung manuell zu betätigen. Durch das Verändern von Parametern der Oszillationsbewegung vermeidet man, dass sich Interferenzmuster auf der Oberfläche ausbilden, die sich ansonsten bei einer sinusförmigen Bewegung ergeben können. Durch die Einflussnahme auf die Parameter der Oszillationsbewegung kann man darüber hinaus auch Einfluss auf den Poliervorgang nehmen.

Bevorzugterweise steuert die Steuereinrichtung die Relativbewegung in die zweite Richtung mit einer geringeren Geschwindigkeit als die oszillierende Bewegung. Dies gilt jedenfalls für einen Teil des Poliervorganges. Dadurch lassen sich dann Polierbahnen erzeugen, die eine Hauptkomponente in die erste Richtung aufweisen.

Vorzugsweise ist das Polierwerkzeug in die erste Richtung und der Werkstückhalter in die zweite Richtung bewegbar. Man kann also für die Bewegungen in die unterschiedlichen Richtungen auch unterschiedliche Antriebe verwenden. Die Entkopplung der Bewegungssteuerung erleichtert es, das Polierwerkzeug entlang einer vorbestimmten Bahn zu führen.

Vorzugsweise ist der Werkstückhalter mit einer Drehzahl im Bereich von 50 bis 1000 U/min drehbar. Insbesondere bei rotationssymmetrischen Werkstücken ist eine derartige Ausbildung von Vorteil. Wenn das Werkstück durch den Werkstückhalter gedreht wird, dann kann man durch eine einfache lineare Bewegung des Polierwerkzeugs parallel zur Rotationsachse jeden Bereich des Werkstücks, der poliert werden soll, erreichen.

Auch die Stirnseite des Werkstücks lässt sich bei einer Rotationsbewegung polieren.

Vorzugsweise sind mehrere Werkzeughalter mit unterschiedlichen Federeigenschaften vorgesehen. Da man auch über die Federeigenschaften, also die Steifigkeiten der einzelnen Werkzeughalter, Einfluss auf den Poliervorgang nehmen kann, kann man sich dann einen Werkzeughalter aussuchen, der für einen gewünschten Poliervorgang geeignet ist.

Hierbei ist bevorzugt, dass unterschiedliche Polierwerkzeuge jeweils mit unterschiedlichen Kodierungen vorgesehen sind, wobei jede Kodierung nur zu mindestens einem vorbestimmten Werkzeughalter passt. Mit fortschreitenden Polierschritten muss man immer feinere Polierwerkzeuge verwenden. Es ist zweckmäßig, bei einem feineren Polierwerkzeug auch einen geringeren Anpressdruck zu verwenden. Wenn man durch unterschiedliche Steifigkeiten bei den Werkzeughaltern Einfluss auf den Anpressdruck nehmen kann, dann wird die Steuerung der Bewegung des Werkzeughalters einfacher. Im Grunde kann man dann den Werkzeughalter in allen Stufen des Poliervorgangs auf die gleiche Weise bewegen, so dass man keine andere Veränderung an der Poliervorrichtung vornehmen muss, außer den Werkzeughalter mit dem Polierwerkzeug auszuwechseln. Durch die Kodierung kann man dafür sorgen, dass man ein bestimmtes Polierwerkzeug nicht mit einer zu großen Kraft beaufschlagt. Zweckmäßigerweise ist für jede Feinheit des Polierwerkzeugs auch nur ein Werkzeughalter vorgesehen.

Vorzugsweise ist das Polierwerkzeug über einen Zwischenhalter am Werkzeughalter befestigt. Dies erleichtert die Handhabung.

Vorzugsweise ist der Werkzeughalter an einem Handhabungsautomaten mit mindestens zwei Bewegungsachsen angeordnet. Bei dem Handhabungsautomaten kann es sich beispielsweise um einen herkömmlichen Industrieroboter handeln. Ein derartiger Industrieroboter weist vielfach sogar sechs Bewegungsachsen auf, nämlich drei trans-latorische und drei rotatorische Bewegungsachsen.

Vorzugsweise ist der Antrieb und/oder der Werkzeughalter und/oder der Handhabungsautomat mit Bewegungs- und/oder Kraftsensoren versehen. Diese Sensoren ermöglichen es der Poliervorrichtung, die Bewegungen des Polierwerkzeugs relativ zum Werkstück und/oder die Kräfte zwischen dem Polierwerkzeug und dem Werkstück zu messen. Hierdurch kann z.B. der Verschleiß des Polierwerkzeugs überwacht und kompensiert werden.

Vorzugsweise weisen der Werkstückhalter und der Werkzeughalter einen veränderbaren Winkel relativ zueinander auf. Insbesondere im Zusammenhang mit der oszillierenden Zusatzbewegung zwischen dem Werkstück und dem Polierwerkzeug lassen sich dadurch Bewegungsbahnen des Polierwerkzeugs über dem Werkstück einstellen, die in praktisch jedem Punkt der zu polierenden Oberfläche relativ viele Richtungen aufweisen. Dadurch wird das Polierergebnis verbessert.

Vorzugsweise ist ein Auflagedruck des Polierwerkzeugs auf dem Werkstück steuerbar, insbesondere in Abhängigkeit von der Position des Polierwerkzeugs auf dem Werkstück. Mit dieser Ausgestaltung kann man in einem Poliervorgang an jeder Stelle mit dem Auflagedruck arbeiten, der das beste Ergebnis erbringt. Wenn man beispielsweise konturierte Werkstücke polieren möchte, dann kann bei einer Kontur, die durch einen Innenradius gebildet ist, ein anderer Auflagedruck günstig sein als bei einer Kontur, die durch einen Außenradius oder eine gerade oder zylinderförmige Fläche gebildet ist. Auch ist es durch den steuerbaren Auflagedruck möglich, den Poliervorgang an unterschiedliche Materialien oder Oberflächen anzupassen.

Hierbei ist bevorzugt, dass die Poliervorrichtung eine mit einem Druckfluid, insbesondere Druckluft, betriebene Anpressvorrichtung aufweist, die den Auflagedruck beeinflusst. Diese Anpressvorrichtung kann durchaus in den Handhabungsautomaten integriert sein. Sie kann aber auch zwischen dem Handhabungsautomaten und dem Werkzeughalter angeordnet werden. Die Verwendung eines Druckfluids ist eine besonders einfache Maßnahme. Der Druck im Durckfluid bestimmt die Kraft, mit der die Anpresseinrichtung auf das Polierwerkzeug wirkt. Ein gasförmiges Druckfluid hat den zusätzlichen Vorteil, dass es in gewissen Grenzen kompatibel ist, so dass hier eine zusätzliche Federwirkung eingebaut ist, die den Poliervorgang weiter günstig beeinflusst. Druckluft steht in vielen Fabrikationsanlagen ohnehin zur Verfügung.

Vorzugsweise ist der Druck des Druckfluids durch eine Steuereinrichtung gesteuert. Die Steuereinrichtung kann durch eine Veränderung des Drucks den gewünschten Auflagedruck des Polierwerkzeugs auf dem Werkstück auf einfach Weise einstellen.

Erläutert wird auch ein Verfahren zum Polieren einer Werkstückoberfläche eines Werkstücks, bei dam man in einer Vorbearbeitung mikroskopische Vertiefungen in der Oberfläche ausbildet und durch das Polieren einen Teil der Oberfläche, der zwischen den Vertiefungen hervorsteht, verändert. Mit einer derartigen Ausgestaltung schafft man die Möglichkeit, dass sich Schmiermittel in der Oberfläche gut verteilen kann. Die Tiefe der bei der Vorbearbeitung erzeugten Vertiefungen kann beispielsweise in der Größenordnung von 1 bis 10µm, bevorzugt von 3 bis 5 µm liegen. Die verbleibende Oberfläche wird poliert, so dass man eine Werkstückoberfläche mit hervorragenden Qualitäten erhält. Dabei reicht es aus, nur den Teil der Oberfläche, der zwischen den Vertiefungen hervorsteht, zu polieren. Der Grund der Vertiefungen kann unbearbeitet bleiben, weil dies die Verteilung von Schmiermittel nicht behindert.

Die Erfindung wird im Folgenden anhand von bevorzugten Ausführungsbeispielen in Verbindung mit der Zeichnung beschrieben. Hierin zeigen:
- Fig. 1: eine schematische Darstellung einer Poliervorrichtung,
- Fig. 2: eine erste Ausführungsform einer Werkzeughalterung mit Polierwerkzeug an einem Werkstück,
- Fig. 3: eine zweite Ausführungsform einer Werkzeughalterung,
- Fig. 4: eine schematische Darstellung einer Werkstückoberfläche mit Polierbahnen nach dem Stand der Technik,
- Fig. 5: die Polierbahnen nach der Erfindung und
- Fig. 6: einen Ausschnitt aus Fig. 5.

Fig. 7 eine schematische Darstellung einer Oberflächenstruktur in drei unterschiedlichen Bearbeitungszuständen.

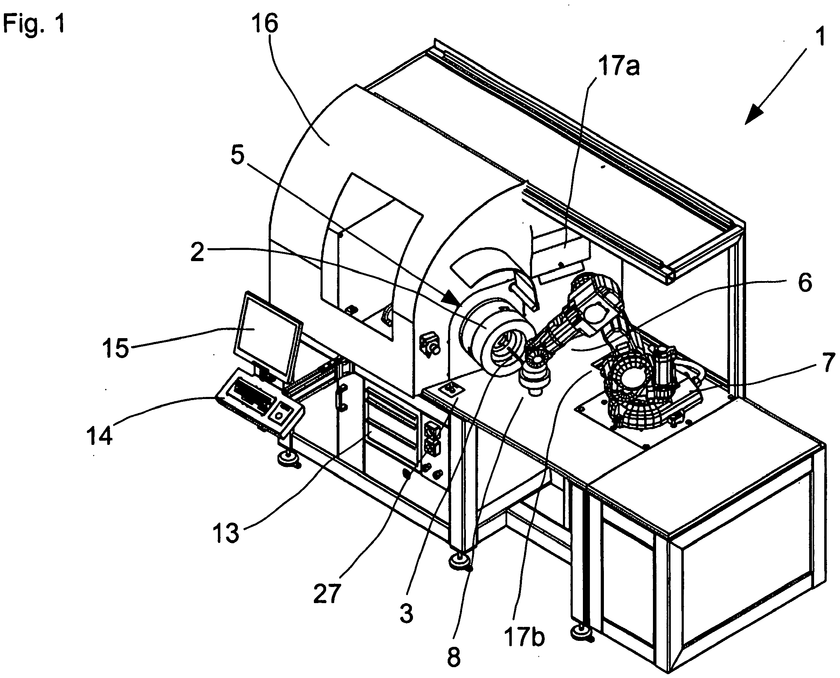

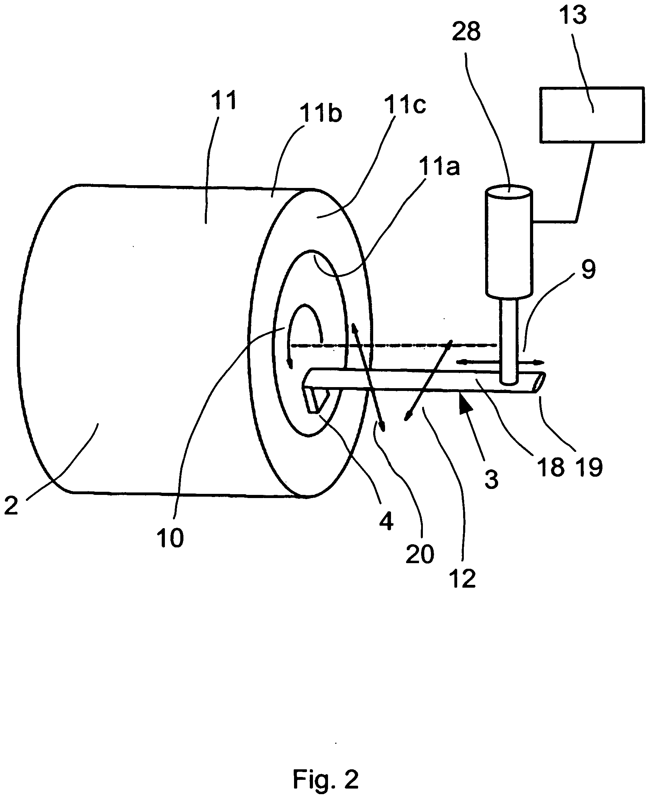

Eine in Fig. 1 dargestellte Poliervorrichtung 1 weist im betriebsbereiten Zustand ein Werkstück 2 und einen Werkzeughalter 3 mit einem daran angeordneten Polierwerkzeug 4 (Fig. 2) auf.

Das Werkstück 2 ist im vorliegenden Fall rotationssymmetrisch ausgebildet und kann deswegen in einem als Drehfutter 5 ausgebildeten Werkstückhalter gehalten werden. Wenn sich das Drehfutter 5 dreht, dann wird das Werkstück 2 in Rotationsbewegungen versetzt.

Der Werkzeughalter 3 ist an einem Arm 6 eines Handhabungsautomaten 7, also eines Industrieroboters, angeordnet. Der Handhabungsautomat 7 hat insgesamt sechs Bewegungsachsen, d.h. er kann einen an der Spitze des Armes 6 angeordneten Oszillationsantrieb 8 in drei translatorische Richtungen bewegen und um drei Rotationsachsen verschwenken. Der Werkzeughalter 3 ist mit dem Oszillationsantrieb 8 verbunden.

Der Oszillationsantrieb 8 kann beispielsweise einen herkömmlichen Exzenterantrieb aufweisen, der die Rotation eines Motors in eine linear oszillierende Bewegung umsetzt. Die Richtung dieser Bewegung wird im Folgenden als "erste Richtung 9" bezeichnet.

Der Arm 6 des Handhabungsautomaten 7 kann die Werkzeughalterung 3 und damit das Polierwerkzeug 4 in praktisch beliebige Positionen und Ausrichtungen relativ zum Werkstück 2 bringen. Wenn sich das Drehfutter 5 dreht, dann bewegt sich die Oberfläche des Werkstücks 2 in eine zweite Richtung 10 (Fig. 2). Die Bewegung in die erste Richtung 9 wird also durch den Handhabungsautomaten 7 gesteuert, wobei dieser Bewegung noch eine Oszillationsbewegung überlagert ist, die vom Oszillations-antrieb 8 gesteuert wird. Die Bewegung in die zweite Richtung 10 wird durch das Drehfutter 5 erzeugt. Durch eine Überlagerung der Bewegung in die erste Richtung 9 und in die zweite Richtung 10 kann man praktisch jeden Punkt auf der Innenseite 11a oder der Außenseite 11 b des Werkstücks 2 erreichen. In Fig. 2 ist zur Verdeutlichung ein Pfeil 12 eingezeichnet, der die zweite Richtung lokal bezogen auf den Werkzeughalter 3 angibt.

Eine Steuereinheit 13, die über eine Tastatur 14 mit Bildschirm 15 betätigt werden kann, steuert sowohl die Bewegung des Handhabungsautomaten 7 als auch die Bewegung des Drehfutters 5. Zusätzlich kann die Steuereinheit 13 auch den Oszillationsantrieb 8 steuern, d.h. dessen Frequenz und/oder Amplitude verändern. Die Veränderung von Frequenz und/oder Amplitude kann durch einen Zufallsgenerator bewirkt werden. Es ist auch möglich, diese Veränderung programmgesteuert vorzunehmen.

Eine Schutzhaube 16 ist seitlich verlagerbar, so dass das Werkstück 2 und der Werkzeughalter 3 für eine Bedienungsperson zugänglich sind. Während eines automatisch ablaufenden Poliervorgangs ist die Schutzhaube 16 allerdings vor das rotierende Werkstück 2 und den Handhabungsautomaten geschoben.

Ein Handtuchhalter 17a hält Papierhandtücher bereit, die in der Regel noch mit Alkohol oder einem anderen Reinigungsmittel getränkt sind, um das Werkstück 2 nach jedem Teilabschnitt eines Poliervorganges zu reinigen. Hinter dem Handhabungsautomaten ist ein Papierkorb 17b vorgesehen, um verbrauchte Handtücher aufzunehmen.

Die Schutzhaube 16 ist mit einem nicht dargestellten Sicherheitsschalter versehen, der beim Öffnen der Schutzhaube 16 sicherstellt, dass die Steuereinheit weder das Drehfutter 3 noch den Handhabungsautomaten 7 aktivieren kann. Um dennoch manuelles Polieren an der Poliervorrichtung 1 zu ermöglichen, ist ein Bedienfeld 27 vorgesehen, über das der Arbeiter das Drehfutter aktivieren und steuern kann. Hierdurch wird sichergestellt, dass der Arbeiter nicht durch maschinell gesteuerte Einrichtungen verletzt wird.

Fig. 2 zeigt nun das Zusammenwirken von Werkstück 2 und Werkzeughalter 3 in vergrößertem Maßstab. Der Werkzeughalter 3 ist als Stab 18 mit einem Querschnitt 19 ausgebildet. Der Querschnitt 19 ist hier oval, d.h. er ist in der zweiten Richtung 12 größer als in einer dritten Richtung 20, die auf der ersten Richtung 9 und auf der zweiten Richtung 12 senkrecht steht. Die Länge des Stabes 18 beträgt mindestens das Zehnfache des wirksamen Durchmessers des Querschnitts 19. Bei einem kreisförmigen Querschnitt 19 wäre dies der normale Durchmesser. Wenn die Form des Querschnitts 19 von der Kreisform abweicht, dann ist der wirksame Querschnitt die Wurzel aus der Querschnittsfläche.

Das Polierwerkzeug 4, das an der Spitze des Werkzeug-halters 3 angeordnet ist, kann als Polierstein ausgebildet sein. Der Werkzeughalter 3 wird durch den Handhabungsautomaten 7 in einer vorbestimmten Weise in Axialrichtung geführt. Dabei überlagert sich der durch den Handhabungsautomaten 7 bewirkten Bewegung eine Oszillationsbewegung in die erste Richtung 9. Die Frequenz dieser Bewegung liegt im Bereich von 20 bis 100 Hz. Die Amplitude dieser Bewegung liegt im Bereich von 0,05 bis 5 mm. Die Rotationsgeschwindigkeit des Drehfutters liegt im Bereich von 50 bis 1000 U/min. Die Amplitude ist so gewählt, dass sie kleiner ist als die Länge des Polierwerkzeugs 4 in der ersten Richtung 9. Dadurch wird eine sehr gleichmäßige Verteilung der geleisteten Polierarbeit in die erste Richtung ermöglicht.

In nicht näher dargestellter Weise können der Handhabungsautomat 7, der Arm 6 des Handhabungsautomaten 7 und/oder der Werkzeughalter 3 mit Beschleunigungs- und/oder Kraftsensoren versehen sein, die es der Steuereinrichtung 13 ermöglichen, die Bewegungen des Polierwerkzeugs 4 und/oder die Kräfte zwischen dem Polierwerkzeug 4 und dem Werkstück 2 in bis zu drei Achsen zu messen. Hierdurch kann beispielsweise der Auflagedruck gesteuert oder der Verschleiß des Polierwerkzeugs 4 überwacht und kompensiert werden.

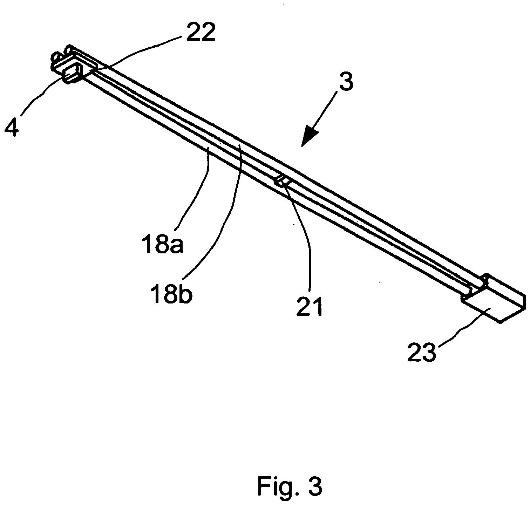

Fig. 3 zeigt eine abgewandelte Ausführungsform eines Werkzeughalters 3. Dieser Werkzeughalter 3 weist zwei Stäbe 18a, 18b auf, die in die zweite Richtung durch eine Strebe 21 miteinander verbunden sind.

An einem Ende befindet sich das Polierwerkzeug 4, das über einen Zwischenhalter 22 am Werkzeughalter 3 befestigt ist. Am anderen Ende ist ein Formstück 23 angeordnet, mit dem der Werkzeughalter 3 mit dem Oszillations-antrieb 8 verbunden wird.

Der Werkzeughalter 3 kann mit Vorteil aus kohle- oder glasfaserverstärktem Kunststoff oder aus einem Leichtmetall, wie z.B. Titan, hergestellt werden. Der oder die Stäbe 18, 18a, 18b des Werkzeughalters 3 können weiter z.B. als Rohr, als mehrere, dünnere Stäbe in einer gemeinsamen Umhüllung, oder als Gitterstruktur ausgebildet werden. Das Polierwerkzeug 4 kann z.B. durch Klebstoff, durch Schrauben oder durch eine Rastverbindung mit dem Werkzeughalter 3 verbunden werden.

Aufgrund der in den Fig. 2 und 3 dargestellten Aufbauten des Werkzeughalters ergibt sich, dass der Werkzeughalter 3 in die erste Richtung 9 die größte Steifigkeit aufweist. In diese Richtung federt der Werkzeughalter 3 praktisch nicht.

In die zweite Richtung 12 weist der Werkzeughalter 3 eine etwas geringere Steifigkeit auf. In die dritte Richtung 20 hingegen ist der Werkzeughalter 3 federnd ausgebildet, d.h. er weist eine relativ geringe Steifigkeit auf. Die Steifigkeit in die zweite Richtung 12 ist mindestens fünfmal so groß wie die Steifigkeit in die dritte Richtung 20. Wenn man die gleiche Kraft in die zweite Richtung 12 und in die dritte Richtung 20 wirken lässt, dann verformt sich der Werkzeughalter 3 in die dritte Richtung 20 dann mindestens fünfmal so stark.

Durch diese federnde Lagerung des Polierwerkzeugs 4 kann die Steuerung des Handhabungsautomaten 7 mit einer gewissen Toleranz erfolgen. Der Handhabungsautomat 7 führt (bezogen auf die Darstellung der Fig. 1) den Werkzeughalter 3 beispielsweise so, dass sich der Angriffspunkt des Werkzeughalters 3 am Oszillations-antrieb 8 immer einige Millimeter unterhalb der Innenseite 11 des Werkstücks 2 befindet. Dadurch wird der Werkzeughalter 3 in die dritte Richtung 20 verformt. Das Polierwerkzeug 4 liegt dann mit einer gewissen Kraft an der Innenseite 11 des Werkstücks 2 an.

Alternativ kann die Steuereinheit 13 nach Eingabe der Werkstückgeometrie eine programmgesteuerte Bewegung des Werkzeughalters 3 vornehmen, um den Abstand in die dritte Richtung 20 zwischen dem Werkstück 2 und dem Polierwerkzeug 4 während des Poliervorgangs annähernd konstant zu halten. Bei einfachen Werkstückgeometrien kann die Eingabe aus einzelnen Parametern, wie z.B. die axiale Ausdehnung des Werkstücks und des Polierwerkzeugs, bestehen. Komplizierte Werkstückgeometrien können z.B. direkt aus einem Konstruktionsprogramm übernommen, rechnergestützt durch den Bediener eingegeben oder vom System selbsttätig vermessen werden.

Wenn sich das Polierwerkzeug 4 abnutzt oder ein anderes Polierwerkzeug verwendet wird, dann ist in der Regel keine Änderung der Bewegungssteuerung des Handhabungsautomaten 7 erforderlich. Es ergeben sich zwar kleinere Änderungen bei der Kraftbeaufschlagung des Polierwerkzeugs 4. Diese sind jedoch noch in einem tolerierbaren Bereich.

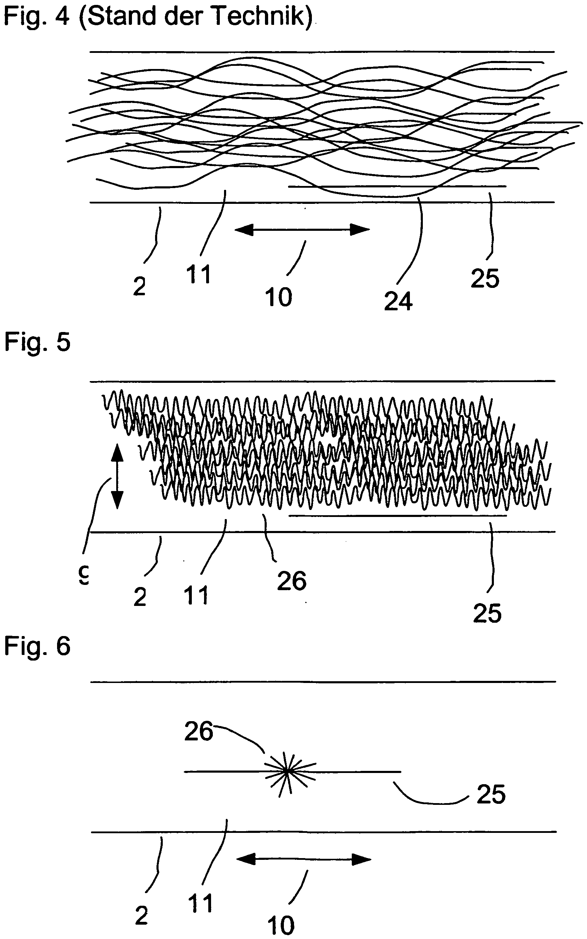

Wenn das Polierwerkzeug 4 über die Innenseite 11 des Werkstücks 2 geführt wird, dann würden sich nach dem Stand der Technik (Fig. 4) wellenförmige Polierbahnen 24 ergeben, die im Wesentlichen in die zweite Richtung 10 laufen. Wenn eine Störung 25 vorliegt, die in die gleiche Richtung 10 läuft, dann lässt sich diese Störung 25, beispielsweise eine Drehspur, durch das Polieren praktisch nicht entfernen.

Fig. 5 zeigt Polierbahnen 26 nach der vorliegenden Erfindung. Es ist zu erkennen, dass diese Polierbahnen unterschiedliche Wellenlängen, Amplituden und Positionen in die erste Richtung 9 aufweisen. Wenn derartige Polierbahnen 26 auf die Störung 25 treffen, dann wird diese Störung 25 schneller und zuverlässiger beseitigt, weil es einen höheren Anteil an Polierbahnen 26 gibt, die einen relativ großen Winkel zur Störung 25 aufweisen. Dies ist in Fig. 6 noch einmal in vergrößerter Darstellung gezeigt.

In der Regel wird man für ein vollständiges Polieren des Werkstücks 2 mehrere Poliervorgänge durchführen müssen, wobei man bei jedem Poliervorgang ein feineres Polierwerkzeug 4 verwendet als beim vorherigen Vorgang. Diese Auswahl bleibt im vorliegenden Fall nach wie vor einer Bedienungsperson überlassen. Die Bedienungsperson kann auch kontrollieren, ob der Poliervorgang mit einem Polierwerkzeug 4 bereits den gewünschten Effekt gebracht hat oder verlängert werden muss.

Ein feineres Polierwerkzeug benötigt unter Umständen eine geringere Andrückkraft. Um dies auf einfache Weise sicherzustellen, ist für jedes Polierwerkzeug 4 ein eigener Werkzeughalter 3 vorgesehen. Natürlich kann man auch für eine Gruppe von Polierwerkzeugen 4 einen Werkzeughalter 3 vorsehen. Werkzeughalter 3 und Polierwerkzeug 4 sind dann passend zueinander kodiert. Diese Kodierung kann einfach darin bestehen, dass das Polierwerkzeug 4 einer bestimmten Qualität eine Befestigungsgeometrie aufweist, die nur in die Befestigungsgeometrie eines bestimmten Werkzeughalters 3 passt. Wenn das Polierwerkzeug 4 ausgewechselt werden muss, dann wird gleich der gesamte Werkzeughalter 3 vom Handhabungsautomaten gelöst und ein neuer Werkzeughalter 3 montiert. Man kann allerdings die Bedienungsperson dadurch unterstützen, dass man nach einem Polierabschnitt am Bildschirm 15 anzeigt, welches Polierwerkzeug 4 zweckmäßigerweise beim nächsten Poliervorgang verwendet werden soll.

Wie oben erwähnt, kann der Auflagedruck des Polierwerkzeugs auf dem Werkstück gesteuert werden. Hierzu ist zweckmäßigerweise eine Anpressvorrichtung 28 vorgesehen, die mit einem Druckfluid, beispielsweise Druckluft, betrieben werden kann. Der Druck des Druckfluids kann durch die Steuereinrichtung 13 gesteuert werden. Diese Steuereinrichtung 13 kann dazu mit einem nicht näher dargestellten Druck- oder Kraftsensor verbunden sein. In Fig. 2 ist die Anpressvorrichtung so dargestellt, dass sie auf den Stab 18 wirkt. Diese Anordnung ist jedoch nur beispielhaft. Die Anpressvorrichtung kann auch an anderer Stelle angeordnet sein, beispielsweise in den Handhabungsautomaten 7 oder in den Oszillations-antrieb 8 integriert sein. Durch den oben erwähnten Druck- oder Kraftsensor ist es auch möglich, den Auflagedruck zu regeln.

Es kann zweckmäßig sein, die Oszillationsgeschwindigkeit des Polierwerkzeugs 4, also die Bewegung in die erste Richtung 9, größer zu wählen als die Bewegung der zu polierenden Oberfläche in die zweite Richtung 12. Durch Veränderung dieses Geschwindigkeitsverhältnisses lassen sich unterschiedliche Winkel einstellen, mit denen das Polierwerkzeug 4 über die zu polierende Oberfläche geführt wird. Wenn die Bewegung in die erste Richtung 9 größer ist als die Bewegung der zu polierenden Oberfläche in die zweite Richtung 12, dann verläuft der größte Teil der Polierbahnen überwiegend quer zu den bei rotationssymmetrischen Werkstücken am häufigsten auftretenden Bearbeitungsspuren, wodurch diese schneller beseitigt werden.

Mit Hilfe des Handhabungsautomaten 7 kann man auch die winkelmäßige Ausrichtung zwischen dem Werkzeughalter 3 und dem Werkstück 2 verändern, um auch auf diese Weise bei jedem Hub der Oszillationsbewegung einen anderen Winkel der Bewegung des Polierwerkzeugs 4 zu erreichen, wie dies in Fig. 6 dargestellt ist. Hierdurch ist es auch möglich, nicht rotationssymmetrische Werkstücke und Stirnseiten 11c von Werkstücken zu polieren.

Die Steuereinheit 13 oder ein anderer Rechner kann dazu benutzt werden, die Variation der Frequenzen, Amplituden und axialen Werkzeugpositionen vorauszuberechnen. Hierzu können z.B. bereits bekannte Optimierungsverfahren eingesetzt werden, um z.B. zu erzielen, dass jeder Punkt auf der zu polierenden Werkstückoberfläche 11 von Polierbahnen 26 durchlaufen wird, die eine möglichst große Winkelvariation aufweisen. Die Berechnung kann dabei mit Rücksicht auf die Vorbearbeitungsgeschichte stattfinden, wenn z.B. bekannt ist, in welchen Bereichen an der Werkstückoberfläche 11 Drehspuren 25 typischerweise auftreten. Z.B. kann die axiale Verteilung der Polierarbeit entsprechend gesteuert werden. Weiter können die Frequenz und die Amplitude der Oszillationsbewegung des Polierwerkzeugs 4 z.B. in Abhängigkeit des radialen Abstandes des Polierwerkzeugs 4 von der Rotationsachse des Werkstücks 2 und/oder in Abhängigkeit der Feinheit des verwendeten Polierwerkzeugs 4 erfolgen, so dass sich die relative Geschwindigkeit (d.h. die Spitzen- oder Effektivwerte) innerhalb vorgegebener Grenzen hält.

Die Vorrichtung 1 nach der Erfindung eignet sich überraschenderweise hervorragend für das Polieren von Umformwerkzeugen 2 für das Kaltfließen. Gerade in dieser Branche wird heute noch überall manuell poliert, weil bisherige Erfahrungen gezeigt haben, dass es nicht möglich war, die Erfahrung und das Beurteilungsvermögen menschlicher Arbeitskraft durch Maschinen zu ersetzen. Vor dem Polieren von Umformwerkzeugen 2 wird die Form der Oberfläche normalerweise durch Bearbeitungsprozesse wie Hartdrehen, Schleifen, Fräsen oder Erodieren mit hoher Genauigkeit auf Fertigmaß gebracht. Der Poliervorgang soll deswegen nicht die Geometrie der Oberfläche 11 verändern, sondern die Mikrostruktur und die Rauheitsgüte der Oberfläche 11 verfeinern. Dies ist anders als beim Polieren von Oberflächen anderer metallischer Produkte, wie z.B. Gebrauchsgegenständen, Wasserarmaturen, Kunststoffgießformen oder Produkten mit Spiegeloberflächen, die gewöhnlich mit dem einzigen Ziel poliert werden, optisch erkennbare Muster oder Fehler zu vermeiden. Solche Werkstücke müssen daher nicht nur sehr fein, sondern auch ohne langwellige oder makroskopische Formfehler poliert werden. Bei Umformwerkzeugen 2 dagegen kann der Poliervorgang relativ zu der vorbearbeiteten Oberfläche 11 vorgehen und kann deswegen mit einer relativ flexiblen Positionierung des Polierwerkzeugs 4 erfolgen.

Nach der Vorbearbeitung des rohen Werkstücks 2 bleiben Bearbeitungsspuren 25 an der Oberfläche 11 zurück, und der Zweck des Polierens ist, diese Bearbeitungsspuren 25 zu beseitigen, ohne die Mikrostruktur der Oberfläche 11 zu beschädigen. Insbesondere muss vermieden werden, dass die Metallgitterstruktur dicht unterhalb der Oberfläche 11 z.B. durch Ermüdung beschädigt wird. Beim Polieren mit der Vorrichtung 1 der Erfindung werden hervorstehende Bearbeitungsrauheiten und -spuren nach und nach schonend abgetragen, wodurch die obere Schicht der Oberfläche 11 zunehmend glatter wird, während die Struktur der Schichten gleich darunter erhalten bleibt. Größere Strukturen, wie z.B. Abstufungen, werden den Poliervorgang überstehen, jedoch in geglätteter Form. Solche Strukturen haben aber nur geringe Einwirkung auf die Qualität oder die Lebensdauer eines Umformwerkzeuges für das Kaltfließen.

Die Vorrichtung 1 nach der Erfindung eignet sich ebenfalls hervorragend, um die Oberfläche eines Werkstücks 2 so zu bearbeiten, dass ein gleichmäßig verteilter, mikroskopischer Abtrag entsteht. Z.B. kann über die gesamte Werkstückoberfläche 11 eine Materialschicht von nur 1 µm oder weniger Abgetragen werden, wobei der Abtrag und die Verteilung des Abtrags auf der Oberfläche 11 vollständig und präzise steuerbar sind. Hierdurch werden überraschenderweise ganz neue Bearbeitungsverfahren und damit auch das Herstellen ganz neuer Oberflächenstrukturen ermöglicht.

Es ist bereits bekannt, Vertiefungen oder Furchen, z.B. durch Honen, in einer Werkstückoberfläche auszubilden, z.B. in den Gleitflächen einer Maschinenkomponente, wobei die Vertiefungen geeignet sind, Öl oder andere Schmiermittel aufzunehmen und zu verteilen. Hierdurch wird das Verteilen des Schmiermittels in den Gleitflächen während des Betriebs der Maschine erleichtert. Durch das zuverlässigere Schmieren wird damit die Lebensdauer der Gleitflächen erhöht. Bisherig bekannte Verfahren zum Ausbilden solcher Vertiefungen weisen jedoch Nachteile auf. Erstens werden die Tiefe und die Breite der Vertiefungen im Wesentlichen durch Auswahl des Bearbeitungswerkzeugs, wie z.B. den Honstein, gesteuert. Somit ist nur eine relativ grobe Steuerung dieser Parameter möglich. Zweitens wird der Anteil der Werkstückoberfläche, der mit Vertiefungen versehen wird, durch Verändern der Bearbeitungszeit gesteuert. Um einen hohen Flächenanteil an Vertiefungen zu erreichen, muss das Bearbeitungswerkzeug mehrmals über die Werkstückoberfläche geführt werden. Das Bearbeitungswerkzeug kann dabei im Vergleich zur Breite der Vertiefungen nur grob positioniert werden. Hierdurch erhöht sich das Risiko, dass die Verteilung der Vertiefungen über die Werkstückoberfläche unregelmäßig wird, wodurch die Standfestigkeit und die Schmiereigenschaften der Gleitfläche beeinträchtigt werden können.

Mit dem erfindungsgemäßen Verfahren zum Polieren einer Werkstückoberfläche eines Werkstücks ist es jetzt möglich, relativ tiefe, aber dennoch mikroskopische Vertiefungen in eine Werkstückoberfläche einzuarbeiten, wobei der relative Anteil der Oberfläche, der für die Vertiefungen verwendet wird, und die Verteilung der Vertiefungen über die Oberfläche präzise steuerbar sind. Dies wird dadurch erreicht, dass man in einer Vorbearbeitung mikroskopische Vertiefungen in der Oberfläche ausbildet und durch das Polieren einen Teil der Oberfläche, der zwischen den Vertiefungen hervorsteht, verändert.

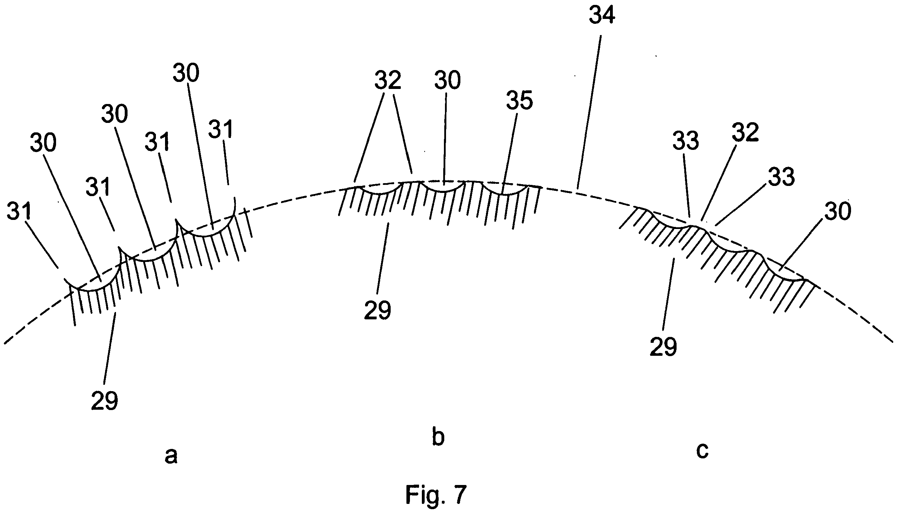

Fig. 7 zeigt schematische Schnitte a, b, c durch eine Werkstückoberfläche 29 eines Werkstücks, die entsprechend einem Ausführungsbeispiel des Verfahrens nach der Erfindung bearbeitet wurde. Die Werkstückoberfläche 29 wird in den Schnitten a, b, c beispielhaft entlang einer zylindrischen Sollfläche 34 gezeigt. Dabei sind die Richtung senkrecht zur Sollfläche 34 und die Krümmung der Sollfläche 34 überproportional dargestellt. Die Werkstückoberfläche 29 kann z.B. als Lager- oder Gleitfläche für ein Lager vorgesehen sein, wie z.B. eine Lagerschale, eine Rolle oder eine Kugel in einem Roll-, bzw. einem Kugellager oder ein Gleitlager.

Auch Umformflächen an Umformwerkzeugen, wie z.B. Tiefziehwerkzeugen für das Blechpressen oder Reduzierwerkzeugen für das Draht-, Stab-oder Rohrziehen, können vorteilhaft durch das Verfahren nach der Erfindung bearbeitet werden.

Die Werkstückoberfläche 29 wurde bereits bei der Vorbearbeitung unter Einhaltung entsprechender Toleranzen in die für die mechanische Funktion des Werkstücks erforderliche Form gebracht. Gleichzeitig oder anschließend wurde eine mehr oder wenige regelmäßige Wellenstruktur mit Vertiefungen 30 in die Werkstückoberfläche 29 geformt. Die Vertiefungen 30 können z.B. durch Hartdrehen, Fräsen oder Schleifen gebildet werden. Die Vertiefungen 30 haben vorzugsweise eine Tiefe von 1 bis 10 µm, vorzugsweise 3 bis 5 µm, und eine Breite, oder Wellenlänge, von 10 bis 500 µm, vorzugsweise 100 bis 250 µm. Der Schnitt a zeigt die Werkstückoberfläche 29 in diesem Bearbeitungszustand. Zwischen den Vertiefungen 30 stehen Gipfel oder Rücken 31 hervor. Die Gipfel oder Rücken 31 ragen teilweise über die Sollfläche 34 hinaus.

Anschließend wurde die Werkstückoberfläche 29 poliert, wodurch die Gipfel oder Rücken 31, die zwischen den Vertiefungen 30 hervorstanden, verändert wurden. Dieser Bearbeitungszustand wird im Schnitt b gezeigt. Die Gipfel oder Rücken 31 wurden teilweise abgetragen, wodurch glatte Gleitflächen 32 gebildet wurden, die entlang der Sollfläche 34 verlaufen und etwa ein Drittel der Werkstückoberfläche 29 ausmachen, während der restliche Teil von Vertiefungen 30 durchzogen ist. Der Grund 35 der Vertiefungen verblieb durch das Polieren unverändert. Die Gleitflächen 32 bilden zusammen eine Funktionsfläche des Werkstücks, z.B. eine Lagerfläche oder eine Umformfläche. Die Funktionsfläche wird im Betrieb aus den Vertiefungen 30 mit Schmiermittel versorgt, sodass ein hydrodynamischer Schmierfilm auf der Funktionsfläche entsteht. Durch Verändern des Abtrags kann das Flächenverhältnis zwischen Gleitflächen 32 und Vertiefungen 30 gesteuert werden, wodurch die Standfestigkeit und die Schmiereigenschaften der Werkstückoberfläche 29 beeinflusst werden können. Bei einem großen Abtrag und damit einen hohen Gleitflächenanteil, z.B. 80% der Werkstückoberfläche 29, wird eine hohe Standfestigkeit der Funktionsfläche gewährleistet, während bei einem geringen Abtrag und damit einen niedrigen Gleitflächenanteil, z.B. 20 %, die Fähigkeit der Oberfläche 29, Schmiermittel aufzunehmen und zu verteilen, gesteigert wird.

Im Schnitt c wird ein Bearbeitungszustand der Werkstückoberfläche 29 nach einem weiteren Polieren, jedoch mit einem relativ weichen Polierwerkzeug, gezeigt. Hierdurch wurden die Kanten 33 der Gleitflächen 32 leicht abgerundet. Die abgerundeten Kanten 33 reduzieren das Risiko, dass die Kanten 33 den Schmiermittelfilm zerreißen, und tragen somit dazu bei, den Schmiermittelfilm aufrecht zu halten.

Beim Polieren der mit Vertiefungen 30 versehenen Werkstückoberfläche 29 ist es besonders wichtig für die Schmiereigenschaften der Oberfläche 29 des daraus entstehenden Werkzeugs, bzw. der daraus entstehenden Maschinenkomponente, dass die Vertiefungen 30 beim Polieren nicht ganz beseitigt werden, und dass das beim Polieren abgetragene Material nicht in die Vertiefungen 30 hineingewälzt wird. Ferner ist es für die Standfestigkeit eines solchen Umformwerkzeugs, bzw. einer solchen Maschinenkomponente besonders wichtig, dass die Gleitfläche 32 sorgfältig gesteuert, abgemessen und gleichmäßig poliert wird, sodass zum Einen die gesamte Gleitfläche 32 glatt wird, und zum Anderen die Metallgitterstruktur dicht unterhalb der Gleitfläche 32 z.B. durch Ermüdung nicht beschädigt wird. Dies kann nur bei einem kontrollierten, schonenden Poliervorgang gewährleistet werden, der z.B. durch die Poliervorrichtung nach der Erfindung ermöglicht wird.

## Patentansprüche

1. Poliervorrichtung (1) mit einem Werkzeughalter (3), an dem ein Polierwerkzeug (4) angeordnet ist und der mit einem Werkstückhalter (2), in dem ein Werkstück mit einer zu polierenden Werkstückoberfläche gehalten ist, zusammenwirkt, wobei der Werkstückhalter (2) und der Werkzeughalter (3) relativ zueinander in eine erste Richtung (9) und eine sich von der ersten Richtung (9) unterscheidenden zweiten Richtung (10, 12) bewegbar sind, **dadurch gekennzeichnet, dass** der als Stab (18) ausgebildete Werkzeughalter (3) in eine dritte Richtung (20), die senkrecht zur ersten Richtung (9) und zur zweiten Richtung (10, 12) und praktisch senkrecht auf der Werkstückoberfläche steht, federnd ausgebildet ist und in die dritte Richtung (20) seine kleinste Steifigkeit aufweist.

2. Poliervorrichtung nach Anspruch 1, **dadurch gekennzeichnet, dass** der Werkzeughalter (3) in die zweite Richtung (10, 12) eine Steifigkeit aufweist, die mindestens fünfmal größer als die Steifigkeit in die dritte Richtung (20) ist.

3. Poliervorrichtung nach Anspruch 1 oder 2, **dadurch gekennzeichnet, dass** der Werkzeughalter (3) eine Länge aufweist, die mindestens dem Zehnfachen seines maximalen wirksamen Durchmessers entspricht.

4. Poliervorrichtung nach einem der Ansprüche 1 bis 3, **dadurch gekennzeichnet, dass** ein Antrieb (8) vorgesehen ist, der der Relativbewegung zwischen dem Werkstückhalter (5) und dem Polierwerkzeug (4) eine oszillierende Zusatzbewegung überlagert.

5. Poliervorrichtung nach Anspruch 4, **dadurch gekennzeichnet, dass** die oszillierende Bewegung eine Frequenz im Bereich von 20 bis 100 Hz aufweist.

6. Poliervorrichtung nach einem der Ansprüche 4 bis 5, **dadurch gekennzeichnet, dass** die oszillierende Bewegung eine Amplitude im Bereich von 0,05 bis 5 mm aufweist.

7. Poliervorrichtung nach einem der Ansprüche 4 bis 6, **dadurch gekennzeichnet, dass** der Antrieb (8) mit einer Steuereinrichtung (13) verbunden ist, die eine Oszillationsfrequenz und/oder eine Oszillationsamplitude verändert.

8. Poliervorrichtung nach Anspruch 7, **dadurch gekennzeichnet, dass** die Steuereinrichtung (13) die Relativbewegung in die zweite Richtung (10, 12) mit einer geringeren Geschwindigkeit als die oszillierende Bewegung steuert.

9. Poliervorrichtung nach einem der Ansprüche 1 bis 8, **dadurch gekennzeichnet, dass** das Polierwerkzeug (4) in die erste Richtung (9) und der Werkstückhalter (5) in die zweite Richtung (10, 12) bewegbar ist.

10. Poliervorrichtung nach einem der Ansprüche 1 bis 9, **dadurch gekennzeichnet, dass** der Werkstückhalter (2) mit einer Drehzahl im Bereich von 50 bis 1000 U/min drehbar ist.

11. Poliervorrichtung nach einem der Ansprüche 1 bis 10, **dadurch gekennzeichnet, dass** mehrere Werkzeughalter (3) mit unterschiedlichen Federeigenschaften vorgesehen sind.

12. Poliervorrichtung nach Anspruch 11, **dadurch gekennzeichnet, dass** unterschiedliche Polierwerkzeuge (4) jeweils mit unterschiedlichen Kodierungen vorgesehen sind, wobei jede Kodierung nur zu mindestens einem vorbestimmten Werkzeughalter (3) passt.

13. Poliervorrichtung nach Anspruch 11 oder 12, **dadurch gekennzeichnet, dass** das Polierwerkzeug (4) über einen Zwischenhalter (22) am Werkzeughalter (3) befestigt ist.

14. Poliervorrichtung nach einem der Ansprüche 1 bis 13, **dadurch gekennzeichnet, dass** der Werkzeughalter (3) an einem Handhabungsautomaten (7) mit mindestens zwei Bewegungsachsen angeordnet ist.

15. Poliervorrichtung nach Anspruch 14, **dadurch gekennzeichnet, dass** der Antrieb (8) und/oder der Werkzeughalter (3) und/oder der Handhabungsautomat (7) mit Bewegungs- und/oder Kraftsensoren versehen sind.

16. Poliervorrichtung nach einem der Ansprüche 1 bis 15, **dadurch gekennzeichnet, dass** der Werkstückhalter (5) und der Werkzeughalter (3) einen veränderbaren Winkel relativ zueinander aufweisen.

17. Poliervorrichtung nach einem der Ansprüche 1 bis 16, **dadurch gekennzeichnet, dass** ein Auflagedruck des Polierwerkzeugs (4) auf dem Werkstück (2) steuerbar ist, insbesondere in Abhängigkeit von der Position des Polierwerkzeugs (4) auf dem Werkstück (2).

18. Poliervorrichtung nach Anspruch 17, **dadurch gekennzeichnet, dass** sie eine mit dem Druckfluid, insbesondere Druckluft, betriebene Anpressvorrichtung (28) aufweist, die den Auflagedruck beeinflusst.

19. Poliervorrichtung nach Anspruch 18, **dadurch gekennzeichnet, dass** der Druck des Druckfluids durch eine Steuereinrichtung (13) gesteuert ist.

## Claims

1. Polishing arrangement (1) with a tool holder (3), at which a polishing tool (4) is arranged and that interacts with a workpiece holder (2), in which is held a workpiece with a workpiece surface to be polished, the workpiece holder (2) and the tool holder being movable in relation to one another in a first direction (9) and in a second direction (10, 12) differing from the first direction (9), **characterised in that**, in a third direction (20) that is perpendicular to the first (9) and second (10, 12) directions and practically perpendicular to the workpiece surface, the tool holder (3) in the form of a rod (18) is made to be flexible and has its smallest rigidity in the third direction (20).

2. Polishing arrangement according to claim 1, **characterised in that**, in the second direction (10, 12), the tool holder (3) has a rigidity that is at least five times larger than the rigidity in the third direction (20).

3. Polishing arrangement according to claim 1 or 2, **characterised in that** the tool holder (3) has a length that is at least ten times its maximum effective diameter.

4. Polishing arrangement according to one of the claims 1 to 3, **characterised in that** a drive (8) is provided that overrides the relative movement between the workpiece holder (5) and the polishing tool (4) by an additional, oscillating movement.

5. Polishing arrangement according to claim 4, **characterised in that** the oscillating movement has a frequency in the range from 20 to 100 Hz.

6. Polishing arrangement according to one of the claims 4 to 5, **characterised in that** the oscillating movement has an amplitude in the range from 0.05 to 5 mm.

7. Polishing arrangement according to one of the claims 4 to 6, **characterised in that** the drive (8) is connected to a control device (13) that changes an oscillation frequency and/or an oscillation amplitude.

8. Polishing arrangement according to claim 7, **characterised in that** the control device (13) controls the relative movement in the second direction (10, 12) at a lower speed than the oscillating movement.

9. Polishing arrangement according to one of the claims 1 to 8, **characterised in that** the polishing tool (4) is movable in the first direction (9) and the workpiece holder (5) is movable in the second direction (10, 12).

10. Polishing arrangement according to one of the claims 1 to 9, **characterised in that** the workpiece holder (2) rotates at a speed in the range from 50 to 1000 rpm.

11. Polishing arrangement according to one of the claims 1 to 10, **characterised in that** several tool holders (3) with different flexibility properties are provided.

12. Polishing arrangement according to claim 11, **characterised in that** different polishing tools (4) are provided with different coding, each coding only fitting with at least one predetermined tool holder (3).

13. Polishing arrangement according to claim 11 or 12, **characterised in that** the polishing tool (4) is fixed to the tool holder (3) by means of an intermediary holder (22).

14. Polishing arrangement according to one of the claims 1 to 13, **characterised in that** the tool holder (3) is arranged on a handling automat (7) with at least two movement axes.

15. Polishing arrangement according to claim 14, **characterised in that** the drive (8) and/or the tool holder (3) and/or the handling automat (7) is/are provided with movement and/or power sensors.

16. Polishing arrangement according to one of the claims 1 to 15, **characterised in that** the workpiece holder (5) and the tool holder (3) have a changeable angle in relation to one another.

17. Polishing arrangement according to one of the claims 1 to 16, **characterised in that** a contact pressure of the polishing tool (4) on the workpiece (2) is controllable, in particular in dependence of the position of the polishing tool (4) on the workpiece (2).

18. Polishing arrangement according to claim 17, **characterised in that** the polishing arrangement comprises a contact pressure arrangement (28) operated by a pressure fluid, in particular pressure air, said contact pressure arrangement (28) influencing the contact pressure.

19. Polishing arrangement according to claim 18, **characterised in that** the pressure of the pressure fluid is controlled by a control device (13).

## Revendications

1. Dispositif de polissage (1) avec un porte-outil (3), sur lequel est disposé un outil de polissage (4) et qui coagit avec un porte-pièce (2) maintenant une pièce avec une surface de pièce à polir, sachant que le porte-pièce (2) et le porte-outil (3) peuvent être déplacés l'un par rapport à l'autre dans une première direction (9) et une deuxième direction (10, 12) divergeant de la première direction (9), **caractérisé en ce que** le porte-outil (3) conçu comme une barre (18) est réalisé de manière élastique dans une troisième direction (20) qui est perpendiculaire à la première direction (9) et à la deuxième direction (10, 12) et pratiquement perpendiculaire à la surface de pièce, et présente sa plus faible rigidité dans la troisième direction (20).

2. Dispositif de polissage selon la revendication 1, **caractérisé en ce que** le porte-outil (3) dans la deuxième direction (10, 12) présente une rigidité qui est au moins cinq fois plus grande que la rigidité dans la troisième direction (20).

3. Dispositif de polissage selon la revendication 1 ou 2, **caractérisé en ce que** le porte-outil (3) présente une longueur qui correspond au moins à dix fois son diamètre effectif maximal.

4. Dispositif de polissage selon l'une quelconque des revendications 1 à 3, **caractérisé en ce qu'**un entraînement (8) est prévu, lequel superpose au mouvement relatif entre le porte-pièce (5) et l'outil de polissage (4) un mouvement supplémentaire oscillant.

5. Dispositif de polissage selon la revendication 4, **caractérisé en ce que** le mouvement oscillant présente une fréquence comprise dans la plage entre 20 et 100 Hz.

6. Dispositif de polissage selon l'une quelconque des revendications 4 à 5, **caractérisé en ce que** le mouvement oscillant présente une amplitude comprise dans la plage entre 0,05 et 5 mm.

7. Dispositif de polissage selon l'une quelconque des revendications 4 à 6, **caractérisé en ce que** l'entraînement (8) est relié à un dispositif de commande (13) qui modifie une fréquence d'oscillation et/ou une amplitude d'oscillation.

8. Dispositif de polissage selon la revendication 7, **caractérisé en ce que** le dispositif de commande (13) commande le mouvement relatif dans la deuxième direction (10, 12) à une plus faible vitesse que le mouvement oscillant.

9. Dispositif de polissage selon l'une quelconque des revendications 1 à 8, **caractérisé en ce que** l'outil de polissage (4) peut être déplacé dans la première direction (9) et le porte-pièce (5) dans la deuxième direction (10, 12).

10. Dispositif de polissage selon l'une quelconque des revendications 1 à 9, **caractérisé en ce que** le porte-pièce (2) peut tourner à une vitesse de rotation comprise dans la plage entre 50 et 1 000 tr/min.

11. Dispositif de polissage selon l'une quelconque des revendications 1 à 10, **caractérisé en ce que** plusieurs porte-outils (3) présentant différentes propriétés élastiques sont prévus.

12. Dispositif de polissage selon la revendication 11, **caractérisé en ce que** différents outils de polissage (4) sont respectivement prévus avec différents codages, sachant que chaque codage ne s'adapte qu'à au moins un porte-outil (3) prédéterminé.

13. Dispositif de polissage selon la revendication 11 ou 12, **caractérisé en ce que** l'outil de polissage (4) est fixé par le biais d'un support intermédiaire (22) sur le porte-outil (3).

14. Dispositif de polissage selon l'une quelconque des revendications 1 à 13, **caractérisé en ce que** le porte-outil (3) est disposé sur un manipulateur (7) présentant au moins deux axes de déplacement.

15. Dispositif de polissage selon la revendication 14, **caractérisé en ce que** l'entraînement (8) et/ou le porte-outil (3) et/ou le manipulateur (7) sont pourvus de capteurs de déplacement et/ou de force.

16. Dispositif de polissage selon l'une quelconque des revendications 1 à 15, **caractérisé en ce que** le porte-pièce (5) et le porte-outil (3) présentent un angle modifiable l'un par rapport à l'autre.

17. Dispositif de polissage selon l'une quelconque des revendications 1 à 16, **caractérisé en ce qu'**une pression d'appui de l'outil de polissage (4) sur la pièce (2) peut être commandée en particulier en fonction de la position de l'outil de polissage (4) sur la pièce (2).

18. Dispositif de polissage selon la revendication 17, **caractérisé en ce qu'**il présente un dispositif de pressage (28) fonctionnant au fluide sous pression, en particulier à l'air comprimé, qui influence la pression d'appui.

19. Dispositif de polissage selon la revendication 18, **caractérisé en ce que** la pression du fluide sous pression est commandée par un dispositif de commande (13).
